# FASCICULE DE BREVET EUROPEEN

(11) **EP 2 676 164 B1**
(45) Date de publication et mention de la délivrance du brevet: **25.04.2018**
(21) Numéro de dépôt: 12703128.4
(22) Date de dépôt: 13.02.2012
(51) Int. Cl.: G02B 27/62, G02B 7/183, F24J 2/10

(54) **PROCEDE DE FABRICATION AMELIORE D'UN REFLECTEUR, DE PREFERENCE POUR LE DOMAINE DE L'ENERGIE SOLAIRE**
VERBESSERTES VERFAHREN ZUR HERSTELLUNG EINES REFLEKTORS, VORZUGSWEISE FÜR EIN SONNENENERGIEFELD
IMPROVED METHOD FOR MANUFACTURING A REFLECTOR, PREFERABLY FOR THE SOLAR ENERGY FIELD

(30) Priorité: 14.02.2011 FR 1151178
(43) Date de publication de la demande: 25.12.2013
(73) Titulaire: Commissariat à l'Énergie Atomique et aux Énergies Alternatives, 75015 Paris (FR)
(72) Inventeur: VIDAL, Frédéric, F-38230 Charvieu (FR); COUTURIER, Raphaël, F-38360 Sassenage (FR)
(74) Mandataire: Ahner, Philippe
(86) Numéro de dépôt international: PCT/EP2012/052371
(87) Numéro de publication internationale: WO 2012/110438

(56) Documents cités:
- US-A- 5 411 617
- US-A1- 2009 056 698
- US-A1- 2009 260 753
- US-A1- 2009 296 245

## Description

### DOMAINE TECHNIQUE

La présente invention se rapporte au domaine de la fabrication de réflecteurs à miroir pour réfléchir et orienter la lumière.

Elle concerne en particulier la fabrication de réflecteurs dont la structure de support du miroir est destinée à être mobile afin de pouvoir orienter la lumière reçue selon différents angles. De tels réflecteurs, à structure de support mobile ou non, peuvent être utilisés pour la réalisation de champs de réflecteurs, par exemple du type Fresnel.

L'invention s'applique en particulier au domaine de l'énergie solaire, notamment pour la réalisation de systèmes comprenant un capteur solaire ainsi qu'un champ de réflecteurs concentrant le rayonnement solaire sur le capteur.

### ÉTAT DE LA TECHNIQUE ANTÉRIEURE

Pour la fabrication d'un réflecteur comprenant un miroir supporté par une structure de support, il est habituellement prévu un moule sur lequel est assemblé provisoirement le miroir, le moule donnant la forme définitive à ce miroir. Ensuite, il est réalisé une étape de mise en position du miroir par rapport à la structure arrière, par déplacement relatif entre le moule supportant le miroir et cette même structure arrière.

On peut prévoir que le miroir vienne directement en appui contre la structure de support à la fin de l'étape précitée. Néanmoins, cela requiert des tolérances de fabrication très faibles pour la structure de support, avec un impact non négligeable sur le coût de fabrication.

Une autre solution consiste à faire en sorte qu'à la fin de l'étape précitée, le miroir se retrouve à distance de la structure arrière, ces deux éléments adoptant leur position relative définitive. Dans ce cas de figure, des blocs de colle préalablement installés sur la structure de support ou sur le miroir, puis chauffés, sont déformés au cours de cette étape de mise en place du miroir, en étant enserrés entre ce miroir et sa structure de support se déplaçant relativement l'un par rapport à l'autre. Après séchage des blocs de colle déformés, ceux-ci assurent la liaison mécanique entre le miroir et sa structure de support.

Cette solution, notamment décrite dans le document US 20090260753A1, permet d'adopter des tolérances de fabrication plus élevées pour la structure de support, même si des surfaces planes spécifiques doivent être prévues sur cette structure pour supporter les blocs de colle en plastique.

En outre, plus les tolérances de fabrication sont élevées, plus les blocs de colle doivent être de volume important pour compenser les défauts de fabrication. Or l'utilisation de blocs de colle de volume important engendre des problèmes de tenue mécanique du miroir sur sa structure, et ne sont donc pas recommandés. En particulier, aux endroits où la colle est trop volumineuse, son manque de rigidité peut créer une déformation locale du miroir, qui s'accompagne nécessairement d'une baisse des propriétés optiques conférées par ce dernier.

Enfin, le chauffage nécessaire au ramollissement des blocs de colle constitue une contrainte supplémentaire dans le procédé de fabrication, sans compter qu'il est également susceptible de générer des défauts de forme résiduels, en raison de retraits potentiellement observés au refroidissement. Par ailleurs, le démontage du miroir ne peut s'effectuer qu'en réchauffant les blocs de colle déformés, ce qui complexifie également cette opération de démontage.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un procédé de fabrication d'un réflecteur comprenant un miroir supporté par une structure de support, ledit procédé comprenant une étape de mise en position du miroir par rapport à ladite structure de support par déplacement relatif d'un moule supportant le miroir, par rapport à ladite structure de support.

Selon l'invention, le procédé comprend également une étape d'ajustement d'une pluralité d'éléments de jonction entre le miroir et la structure de support, dans une position de solidarisation dans laquelle ils sont destinés à être solidarisés au miroir et à la structure de support, cette étape d'ajustement, réalisée durant ladite étape de mise en position du miroir et/ou après celle-ci, conduisant à un déplacement d'au moins certains, et de préférence de l'ensemble des éléments de jonction relativement à ladite structure de support. De préférence, les éléments de jonction sont métalliques, ou encore en céramique ou en matériau polymère. Dans la suite de la description, sans que cela ne soit limitatif, les éléments de jonction seront considérés comme métalliques. Quel que soit le matériau retenu, ils présentent une rigidité suffisante pour ne pas se déformer au cours de ladite étape d'ajustement.

La solution selon la présente invention permet d'adopter des tolérances de fabrication très élevées pour la structure de support, sans que cela ne soit néfaste pour le maintien en forme du miroir. En effet, les éléments de jonction métalliques, quelle que soit leur forme, peuvent être déplacés selon des amplitudes élevées durant l'étape d'ajustement et/ou après celle-ci, sans que cela n'ait d'incidence sur la rigidité de maintien du miroir obtenue en fin de procédé. Cela contraste donc avec les solutions connues de l'art antérieur, où seuls des blocs de colle sont interposés entre le miroir et la structure de support.

Par conséquent, le procédé selon l'invention renforce la tenue mécanique du miroir sur sa structure, ce qui conduit à une amélioration des propriétés optiques conférées par le miroir.

En outre, des surfaces planes n'ont plus à être prévues spécifiquement sur la structure pour supporter les blocs de colle en plastique.

Enfin, en raison de l'absence des blocs de colle de grande dimension, aucun chauffage ne s'avère nécessaire, même si un tel chauffage peut être retenu en fonction des moyens de solidarisation employés entre les éléments de jonction métalliques et le miroir ainsi que la structure de support.

Une première possibilité de mise en oeuvre du procédé consiste à faire en sorte que ladite étape d'ajustement, conduisant au déplacement d'au moins certains des éléments de jonction métalliques relativement à ladite structure de support, s'effectue au moins partiellement automatiquement durant ladite étape de mise en position du miroir, après appui des éléments de jonction métalliques concernés contre ledit miroir.

C'est donc bien l'appui contre le miroir et la poursuite du déplacement relatif entre ce dernier et la structure de support arrière qui conduisent au déplacement des éléments de jonction relativement à cette structure. Le caractère automatique du déplacement est naturellement avantageux en ce qu'il simplifie la mise en oeuvre du procédé. Néanmoins, ce déplacement peut être poursuivi après l'étape de mise en position du miroir, par exemple pour améliorer l'appui des éléments de jonction contre le miroir, et/ou, le cas échéant, enlever la colle en surplus des éléments de jonction préalablement encollés.

Une seconde possibilité de mise en oeuvre du procédé consiste à faire en sorte que ladite étape d'ajustement, conduisant au déplacement d'au moins certains des éléments de jonction métalliques relativement à ladite structure de support, s'effectue exclusivement après ladite étape de mise en position du miroir. Cette étape est alors réalisée manuellement ou de manière automatisée, en fonction de la conception retenue pour les éléments de jonction.

Par ailleurs, il est noté que lesdits éléments de jonction métalliques sont préférentiellement destinés à être collés sur le miroir, par exemple par une colle standard, nécessitant un chauffage ou non pour son application. Une autre possibilité réside dans l'emploi d'un scotch double-face, qui confère une simplicité d'utilisation.

De plus, lesdits éléments de jonction métalliques sont préférentiellement destinés à être solidarisés sur la structure de support par collage et/ou vissage et/ou soudage et/ou rivetage.

De préférence, lesdits éléments de jonction métalliques sont destinés à être solidarisés par collage sur le miroir et/ou sur la structure de support, et lesdits éléments de jonction métalliques sont encollés avant la mise en oeuvre de l'étape d'ajustement. Bien entendu, une alternative est possible, dans laquelle le collage s'effectue après l'étape d'ajustement, c'est-à-dire après que les éléments de jonction aient atteint leur position de solidarisation.

Selon l'invention, lesdits éléments de jonction métalliques sont des profilés de section en forme globale de T dont la base de chacun d'eux est doublée de manière à laisser apparaître entre les deux bases un espace pénétré par une partie de glissement de la structure de support, qui glisse dans cet espace durant ladite étape de mise en position du miroir.

Ici, c'est l'appui contre le miroir et la poursuite du déplacement relatif entre ce dernier et la structure de support arrière qui conduisent au glissement des éléments de jonction relativement à cette structure. Le caractère automatique du déplacement est naturellement avantageux en ce qu'il simplifie la mise en oeuvre du procédé. Néanmoins, ce glissement peut être poursuivi après l'étape de mise en position du miroir, par exemple pour améliorer l'appui des éléments de jonction contre le miroir, et/ou, le cas échéant, enlever la colle en surplus des éléments de jonction préalablement encollés.

Alternativement, ce glissement pourrait être réalisé exclusivement après l'étape de mise en position du miroir, sans sortir du cadre de l'invention. Une solution mixte est également envisageable, avec certains des profilés déplacés pendant et éventuellement après l'étape de mise en position du miroir, et d'autres profilés déplacés seulement après cette étape.

Enfin, une autre alternative peut consister à poser les profilés sur le miroir avant la mise en oeuvre de l'étape de mise en place du miroir, au cours de laquelle le glissement s'opère automatiquement avec les parties associées de la structure de support.

Cependant, de préférence, chaque profilé est monté sur la structure de support avant la mise en oeuvre de ladite étape de mise en position du miroir, par pincement de ladite partie de glissement de la structure de support correspondante, entre les deux bases du profilé. Ledit miroir n'est de préférence pas plan, et réalisé à base de verre, d'aluminium ou de polymère. Ces caractéristiques sont naturellement dissociables. Concernant la forme du miroir, il peut par exemple être du type panneau à simple courbure ou à double courbure. A titre informatif, les panneaux à simple courbure sont dits « développables », et présentent une génératrice rectiligne impliquant qu'ils peuvent être « déroulés » sur un plan. En revanche, les panneaux à double courbure ne sont pas « développables » et ne disposent donc pas de génératrice rectiligne, c'est-à-dire qu'ils ne peuvent pas être « déroulés » sur un plan. Effectivement, ils présentent une première courbure, par exemple dans la direction longitudinale du panneau, ainsi qu'une seconde courbure distincte de la première, par exemple dans la direction transversale de ce même panneau.

L'invention a également pour objet un champ de réflecteurs chacun fabriqué selon le procédé défini ci-dessus. Ce champ est par exemple du type Fresnel, avec les réflecteurs agencés côte à côte et chaque structure de support montée pivotante sur un bâti.

Enfin, l'invention a également pour objet un système comprenant un capteur solaire ainsi qu'un tel champ de réflecteurs concentrant le rayonnement solaire sur le capteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- les figures la à 1c représentent des vues en perspective d'un système selon un mode de réalisation préféré de l'invention, comprenant un capteur solaire ainsi qu'un champ de réflecteurs du type Fresnel ;
- les figures 2a et 2b sont des vues en perspective, selon deux angles de vue distincts, d'un réflecteur exemplaire;
- les figures 3a à 3c représentent des vues de face schématisant différentes étapes du procédé de fabrication de ledit réflecteur exemplaire;
- les figures 4a à 4c représentent des vues en perspective de celles montrées sur les figures 3a à 3c, respectivement ;
- les figures 5a et 5b sont des vues en perspective, selon deux angles de vue distincts, d'un réflecteur destiné à être obtenu selon le procédé de fabrication selon l'invention ;
- les figures 6a à 6d représentent des vues en perspective schématisant différentes étapes du procédé de fabrication selon l'invention;
- les figures 7a et 7b sont des vues en perspective et de face d'un autre réflecteur exemplaire; et
- les figures 8a et 8b représentent des vues en perspective schématisant différentes étapes du procédé de fabrication de ledit autre réflecteur exemplaire.

### EXPOSÉ DÉTAILLÉ DE MODES DE RÉALISATION PARTICULIERS

En référence tout d'abord aux figures la à 1c, on peut voir un système 1 comprenant un capteur solaire 2 ainsi qu'un champ de réflecteurs 4 concentrant le rayonnement solaire sur le capteur. Le champ 4, par exemple du type Fresnel, comprend une rangée de réflecteurs 6 agencés côte à côte. Comme cela sera détaillé ci-après, chaque réflecteur 6 comprend un miroir assemblé sur une structure de support, celle-ci étant montée pivotante sur un bâti 8. Les axes de rotation 10 des réflecteurs sont préférentiellement parallèles. Leur pilotage en rotation peut être indépendant ou dépendant, et commandé de manière à concentrer au mieux le rayonnement solaire sur le capteur 2. A cet égard, les figures la à 1c montrent trois configurations distinctes dans lesquelles les rayons lumineux incidents 12 ont des orientations différentes, chaque configuration étant associée à un calage en rotation particulier de l'ensemble des réflecteurs du champ 4, permettant d'orienter au mieux les rayons réfléchis 14 sur le capteur 2.

Il s'agit de préférence d'un capteur dit de haut flux, pour applications variées, par exemple chauffage d'un fluide caloporteur de type eau, huile ou sel fondu, ou encore pour le domaine photovoltaïque à concentration. Sa puissance est comprise entre plusieurs dizaines de kW/m² et quelques MW/m². Chaque réflecteur 6, de forme globale rectangulaire, présente une surface de plusieurs mètres carré. La précision généralement requise sur ce type de système est de l'ordre 0,1° pour le calage angulaire des réflecteurs.

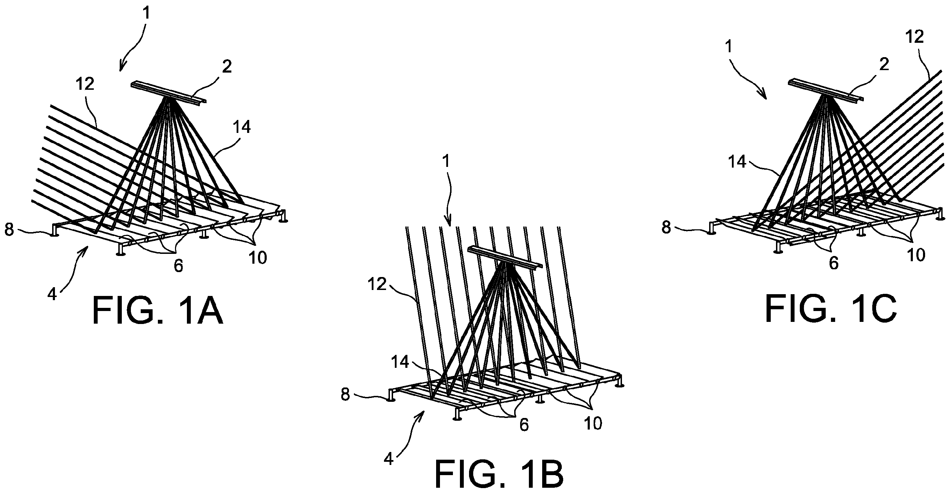

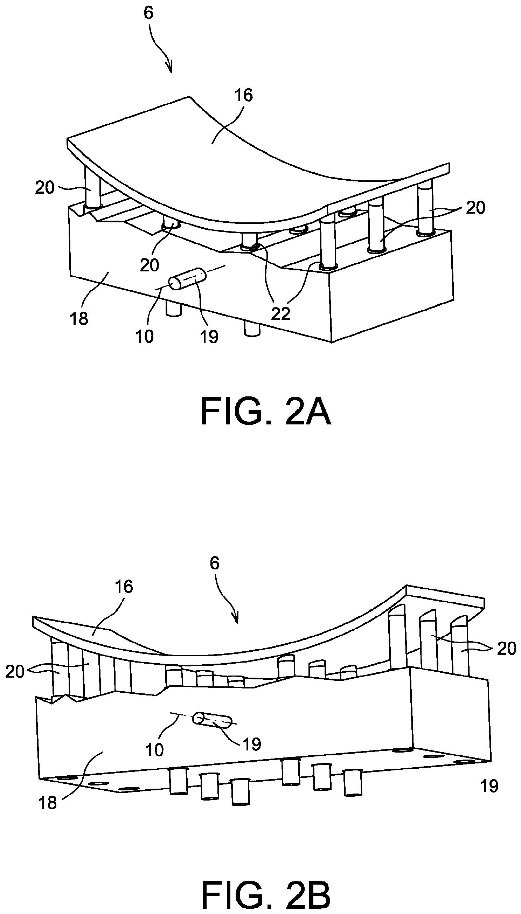

En référence à présent aux figures 2a et 2b, on peut voir un réflecteur 6 du type de ceux utilisés dans le système 1 des figures précédentes, et destiné à être obtenu selon un premier mode de réalisation exemplaire.

Le réflecteur 6 comporte tout d'abord un miroir 16, de forme non plane, réalisé en verre sur une épaisseur de l'ordre de 4 mm, et typiquement comprise entre 0,1 et 7 mm. Sa forme est ici à simple courbure. Néanmoins, d'autres formes peuvent être envisagées.

Il comprend aussi une structure de support 18, par exemple de forme grossièrement parallélépipédique, pleine ou creuse. Elle peut être réalisée en acier, avec de grandes tolérances de fabrication. Elle présente des moyens permettant la rotation du réflecteur selon l'axe 10, ici des pions de rotation 19.

La liaison mécanique entre la structure de support 18 et le miroir 16 ne se fait pas sur toute la surface interne de ce dernier, mais à l'aide d'une pluralité d'éléments de jonction 20 interposés entre le miroir et la structure, en étant solidarisés à ceux-ci. Ces éléments, rigides, sont de préférence métalliques, mais pourraient alternativement être en céramique ou en matériau polymère. La solidarisation s'effectue ici préférentiellement par collage, même si d'autres moyens conventionnels peuvent être employés. Bien évidemment, dans le cas de l'emploi d'une colle en matériau polymère et d'éléments de jonction en matériau polymère, les deux matériaux polymères utilisés sont différents.

Ces éléments 20 sont allongés, par exemple des piges ou barreaux, logés dans des orifices correspondants 22 pratiqués traversants sur la structure de support 18. Dans la position des figures 2a et 2b, l'extrémité supérieure des piges 20 est collée sur la face interne du miroir, tandis que la partie de la surface latérale logée dans la structure 18 est collée sur la partie de la surface latérale en regard de l'orifice correspondant 22.

Les piges 20 sont par exemple réalisées dans un alliage à base d'aluminium, tandis que la colle employée peut être du type colle pâteuse polyuréthane mono-composant, par exemple de la colle vendue par la société 3M sous la référence « Polyurethane Adhesive Sealant 560 ». Un autre exemple est la colle vendue par la société Hutchinson/ljf sous la référence « PR1440 ». La viscosité de la colle choisie est préférentiellement suffisante pour rester localisée au niveau de la liaison entre les éléments de jonction et le miroir et/ou la structure arrière.

La colle est choisie, plus particulièrement, parmi les colles ayant après séchage un modèle de Young compris entre 2 et 60 MPa, et une dureté comprise entre 20 et 60 shore A.

Alternativement, pour coller l'extrémité des piges 20 sur le miroir, il peut s'agir d'un scotch double-face.

Grâce à la rigidité conférée par les piges 20, le miroir maintenu en forme par celles-ci présente des propriétés optiques très satisfaisantes. Naturellement, plus le miroir sera intrinsèquement souple, plus le nombre d'éléments de jonction à prévoir sera élevé.

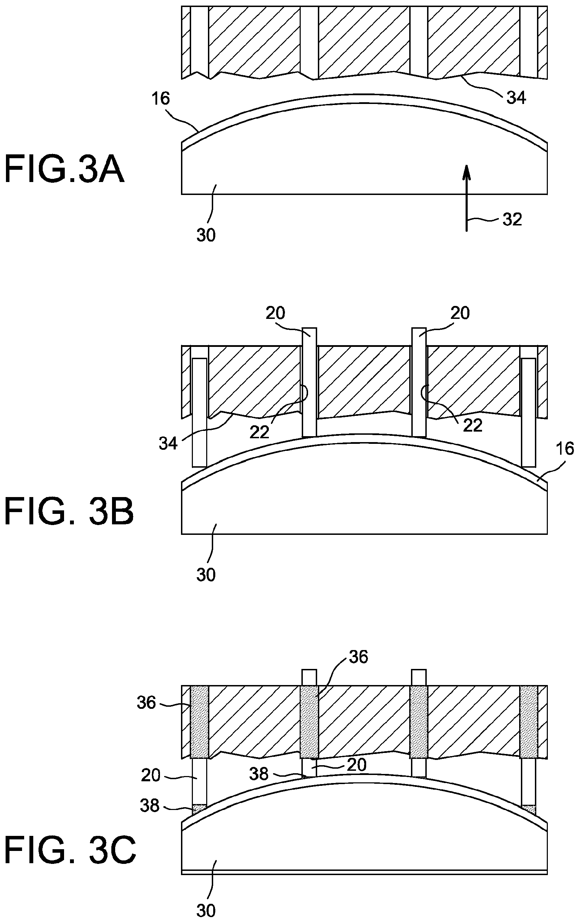

Pour sa fabrication schématisée en référence aux figures 3a à 4c, il est tout d'abord réalisé une étape de mise en position du miroir 16 par rapport à la structure de support 18, non-équipée des piges 20.

Pour ce faire, le miroir est tout d'abord mis en forme sur un moule 30, puis solidarisé à ce dernier de façon temporaire, par exemple à l'aide d'un adhésif conventionnel, ou par tirage au vide. C'est le moule 30 qui applique donc provisoirement la forme définitive au miroir 16.

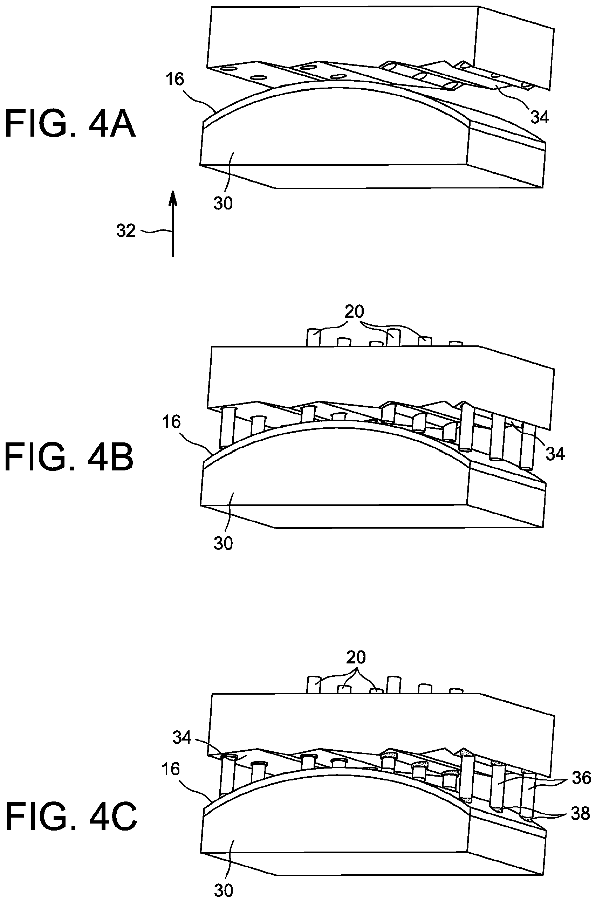

Il est ensuite opéré une étape de mise en position du miroir 16 par rapport à la structure arrière 18, par déplacement relatif entre l'ensemble constitué du moule 30 portant le miroir, et la structure 18. Concrètement, la structure de support est placée immobile dans un repère connu, dans lequel l'ensemble moule/miroir se déplace verticalement vers le haut en direction de cette structure, comme cela a été schématisé par la flèche 32 sur les figures 3a et 4a. A la fin de cette étape de mise en position du miroir 16, celui-ci se retrouve en regard et à distance de la structure 18, aucun contact n'étant préférentiellement observé à ce stade entre ces deux éléments adoptant leur position relative définitive.

Il est ensuite opéré une étape d'ajustement des piges 20. Pour ce faire, comme cela a été schématisé sur les figures 3b et 4b, ces piges 20 sont introduites par le haut dans leurs orifices respectifs 22, puis coulissent vers le bas par gravité dans ces mêmes orifices, avant d'être stoppées par prise d'appui contre la surface interne du miroir 16. Bien entendu, la course de coulissement n'est pas la même pour chaque pige 22, cette course étant fonction de l'éloignement entre le miroir et la surface 34 en regard de la structure arrière 18. Il est par ailleurs noté que cette surface 34 peut être réalisée avec des grandes tolérances, sans que cela ne soit préjudiciable au maintien en forme du miroir, puisque ce dernier est porté directement par les piges, et non par cette surface 34 de laquelle ces piges font saillie.

Dans ce premier mode de réalisation préféré, à la fin de l'étape d'ajustement où les piges 20 adoptent leur position de solidarisation correspondant à leur position définitive par rapport au miroir et à la structure de support, ces piges sont maintenues par gravité en appui contre le miroir. Ensuite, ces piges 20 sont collées au miroir et à la structure de support 18, comme schématisé sur les figures 3c et 4c sur lesquelles les parties grisées 36, 38 correspondent à de la colle. Si ces piges ont été préalablement encollées avant leur introduction dans les orifices 22 de la structure 18, il suffit alors d'observer un simple temps de séchage pour obtenir le durcissement de cette colle.

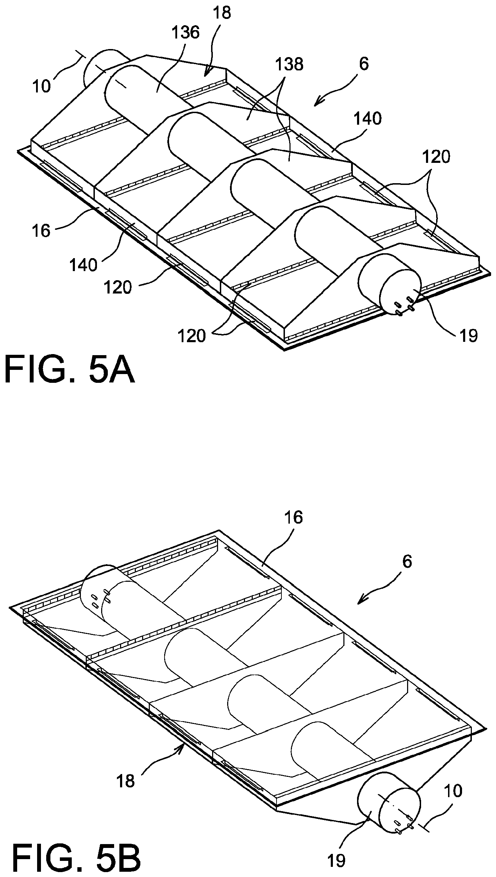

En référence à présent aux figures 5a et 5b, on peut voir un autre réflecteur 6 du type de ceux utilisés dans le système 1 des figures la à 1c, et destiné à être obtenu selon un second mode de réalisation préféré du procédé de fabrication selon l'invention.

Le réflecteur 6 comporte tout d'abord un miroir 16, de forme non plane, réalisé en verre sur une épaisseur de l'ordre de 4 mm. Sa forme est ici à simple courbure, très peu prononcée. Néanmoins, d'autres formes peuvent être envisagées, sans sortir du cadre de l'invention.

Il comprend aussi une structure de support 18, par exemple réalisée à partir d'un cylindre 136 à partir duquel des nervures globalement triangulaires 138 font saillie. Ces nervures 138, espacées le long du cylindre 136 et orthogonales à ce dernier, ont leurs extrémités reliées par deux longerons sensiblement plans 140. Cette structure 18 peut être réalisée en acier, avec de grandes tolérances de fabrication. Elle présente des moyens permettant la rotation du réflecteur selon l'axe 10, ici des pions de rotation 19 constitués par les deux extrémités du cylindre 136.

La liaison mécanique entre la structure de support 18 et le miroir 16 ne se fait pas sur toute la surface interne de ce dernier, mais à l'aide d'une pluralité d'éléments de jonction métalliques 120 interposés entre le miroir et les éléments de structure 138, 140, en étant solidarisés à ceux-ci. La solidarisation s'effectue ici préférentiellement par collage, même si d'autres moyens conventionnels peuvent être employés sans sortir du cadre de l'invention.

Comme cela sera plus détaillé ci-après, les éléments 120 sont des profilés de section en forme globale de T dont la base de chacun d'eux est doublée de manière à laisser apparaître entre les deux bases un espace pénétré par une partie de glissement les éléments de structure 138, 140.

Dans la position de la figure 5a, l'extrémité inférieure des profilés 120, correspondant à la tête du T, est collée sur la face interne du miroir, dite face non-réfléchissante, tandis que la base double du T qui enserre la partie de glissement de son élément de structure correspondant 138, 140 est également collée à cette partie de glissement.

Les profilés 120 sont par exemple réalisés dans un alliage à base d'aluminium, tandis que la colle employée peut être du type colle pâteuse polyuréthane mono-composant, par exemple de la colle vendue par la société 3M sous la référence « Polyurethane Adhesive Sealant 560 ». Alternativement, pour coller l'extrémité des profilés 120 sur le miroir, il peut s'agir d'un scotch double-face. Avantageusement, la colle employée présente une certaine souplesse, au contraire des éléments de jonction plus rigides, ce qui permet de diminuer les contraintes mécaniques subies par le miroir et/ou d'absorber les chocs occasionnés par les intempéries.

Grâce à la rigidité conférée par les profilés métalliques 120, le miroir maintenu en forme par ceux-ci présente des propriétés optiques très satisfaisantes.

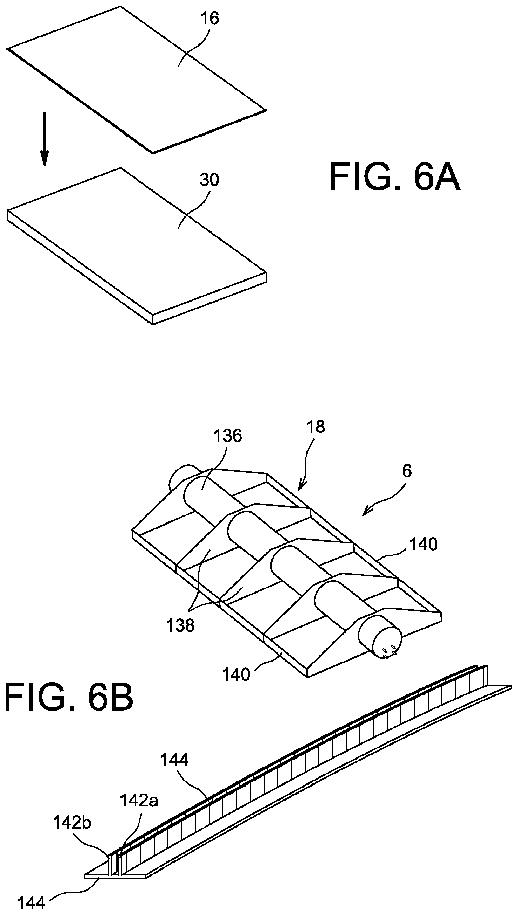

Pour sa fabrication schématisée en référence aux figures 6a à 6d, le miroir 16 est tout d'abord mis en forme sur un moule 30, puis solidarisé à ce dernier de façon temporaire, par exemple à l'aide d'un adhésif conventionnel. Cette étape est schématisée sur la figure 6a. C'est le moule 30 qui applique donc provisoirement la forme définitive au miroir 16.

Ensuite, il est procédé au montage des profilés 120 sur les éléments de structure 138, 140. Comme évoqué ci-dessus, la figure 6b montre que chaque profilé 120 présente une section en forme globale de T dont la base de chacun d'eux est doublée de manière à laisser apparaître entre les deux bases parallèles 142a, 142b un espace 144.

Pour réaliser le montage, chaque profilé 120 vient pincer une partie de glissement de son élément de structure correspondant 138, 140, cette partie de glissement pénétrant en effet dans l'espace 144, entre les deux bases parallèles 142a, 142b, sur toute la longueur du profilé 120.

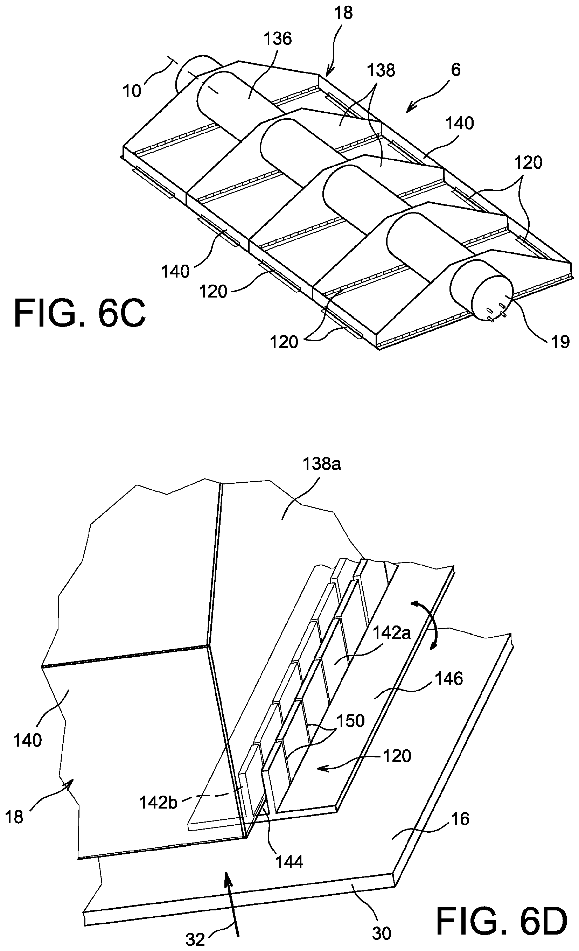

Après montage de tous les profilés 120 sur la structure 18, par pincement, il est obtenu l'ensemble montré sur la figure 6c.

Il est ensuite opéré une étape de mise en position du miroir 16 par rapport à la structure arrière 18, par déplacement relatif entre l'ensemble constitué du moule 30 portant le miroir, et la structure 18. Concrètement, la structure de support est placée immobile dans un repère connu, dans lequel l'ensemble moule/miroir se déplace verticalement vers le haut en direction de cette structure, comme cela a été schématisé par la flèche 32 sur la figure 6d. A la fin de cette étape de mise en position du miroir 16, celui-ci se retrouve en regard et à distance de la structure 18, ces deux éléments adoptant alors leur position relative définitive.

L'une des particularités de ce second mode de réalisation préféré réside dans le fait qu'une étape d'ajustement des profilés 120 s'effectue au moins en partie automatiquement durant l'étape précédemment décrite de mise en position du miroir, représentée sur la figure 6d.

En effet, au cours du déplacement relatif entre le miroir 16 et la structure 18, la tête 146 des profilés 120 arrive en appui contre la surface interne du miroir, et la poursuite de ce déplacement conduit à un glissement des parties de glissement 138a des éléments de structures 138, 140, dans l'espace 144 de leurs profilés respectifs.

Ici, c'est donc l'appui contre le miroir et la poursuite du déplacement relatif entre ce dernier et la structure arrière qui conduisent au glissement des profilés 120 relativement à cette structure arrière. Le caractère automatique du déplacement est naturellement avantageux en ce qu'il simplifie la mise en oeuvre du procédé.

Bien entendu, le glissement n'est pas le même pour chaque profilé 120, ni forcement identique en chaque point du profilé. D'ailleurs, comme cela est le mieux visible sur la figure 6d, les bases parallèles 142a, 142b peuvent être équipées de rainures 150 espacées longitudinalement les unes des autres afin de conférer une souplesse aux profilés dans cette même direction longitudinale, durant leur étape d'ajustement. Cette souplesse du profilé permet en outre de ne pas imprimer en négatif la tête plane 146 des profilés sur le miroir, ce qui pourrait altérer les propriétés du miroir.

Additionnement, les rainures 150 permettent de favoriser l'évacuation de la colle ajoutée en surplus, ainsi que le séchage de la colle mise en oeuvre dans le cadre du procédé.

L'étendue du glissement est donc fonction de l'éloignement entre le miroir et les arêtes des éléments 138, 140 en regard de ce miroir. Il est par ailleurs noté que ces arêtes peuvent être réalisées avec des grandes tolérances, sans que cela ne soit préjudiciable au maintien en forme du miroir, puisque ce dernier est porté directement par la tête 146 des profilés 120, et non par ces arêtes logées dans le espaces inter-bases 140 des profilés.

Le glissement précité peut être poursuivi après l'étape de mise en position du miroir, par exemple pour améliorer l'appui des têtes 146 contre le miroir, et/ou, le cas échéant, enlever la colle en surplus des profilés 120 qui ont été préalablement encollés. Cela peut s'effectuer manuellement, ou de manière automatisée.

Après cette démarche optionnelle, l'étape d'ajustement des profilés 120 est achevée, et ces derniers occupent alors leur position de solidarisation correspondant à leur position définitive par rapport au miroir et à la structure de support, ces profilés étant toujours maintenus par pincement sur les éléments de structure 138, 140. Ensuite, les profilés 120 sont collés au miroir et à la structure de support 18. Dans le cas éventuel où les profilés ont été préalablement encollés avant leur assemblage sur les éléments de structure 138, 140, il suffit alors d'observer un simple temps de séchage pour obtenir le durcissement de cette colle.

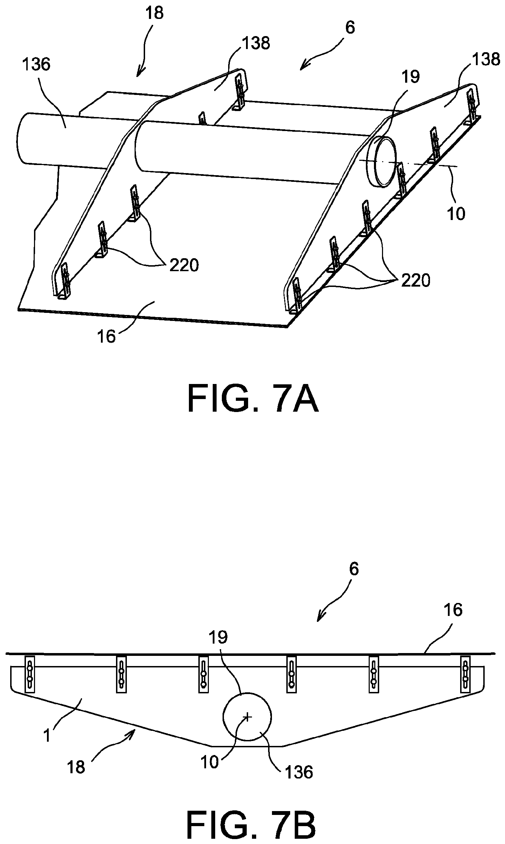

En référence à présent aux figures 7a et 7b, on peut voir un autre réflecteur 6 du type de ceux utilisés dans le système 1 des figures la à 1c, et destiné à être obtenu selon un troisième mode de réalisation exemplaire. Le réflecteur 6 comporte tout d'abord un miroir 16, de forme non plane, réalisé en verre sur une épaisseur de l'ordre de 4 mm. Sa forme est ici à simple courbure, très peu prononcée. Néanmoins, d'autres formes peuvent être envisagées.

Il comprend aussi une structure de support 18, par exemple réalisée à partir d'un cylindre 136 à partir duquel des nervures globalement triangulaires 138 font saillie. Ces nervures 138 sont espacées le long du cylindre 136 et orthogonales à ce dernier. Cette structure 18 peut être réalisée en acier, avec de grandes tolérances de fabrication. Elle présente des moyens permettant la rotation du réflecteur selon l'axe 10, ici des pions de rotation 19 constitués par les deux extrémités du cylindre 136.

La liaison mécanique entre la structure de support 18 et le miroir 16 ne se fait pas sur toute la surface interne de ce dernier, mais à l'aide d'une pluralité d'éléments de jonction métalliques 220 interposés entre le miroir et les nervures 138, en étant solidarisés à ceux-ci. La solidarisation s'effectue ici préférentiellement par collage au niveau du miroir et par vissage au niveau de la structure de support 18, même si d'autres moyens conventionnels peuvent être employés.

Comme cela sera plus détaillé ci-après, les éléments de jonction métalliques 220 sont des pattes présentant une tête d'appui sur le miroir, ainsi qu'un corps relié à la structure de support par une liaison glissière formée par une rainure traversée par au moins deux vis.

Dans la position de la figure 7a, l'extrémité inférieure des pattes 220, correspondant à la tête d'appui, est collée sur la face interne du miroir, tandis que le corps des pattes est solidarisé par vissage sur les nervures 138.

Les pattes 220 sont par exemple réalisées dans un alliage à base d'aluminium, tandis que la colle employée peut être du type colle pâteuse polyuréthane mono-composant, par exemple de la colle vendue par la société 3M sous la référence « Polyurethane Adhesive Sealant 560 ». Alternativement, pour coller l'extrémité des profilés 120 sur le miroir, il peut s'agir d'un scotch double-face. Les vis sont quant à elle préférentiellement réalisées en acier.

Grâce à la rigidité conférée par les pattes métalliques 220, le miroir maintenu en forme par celles-ci présente des propriétés optiques très satisfaisantes.

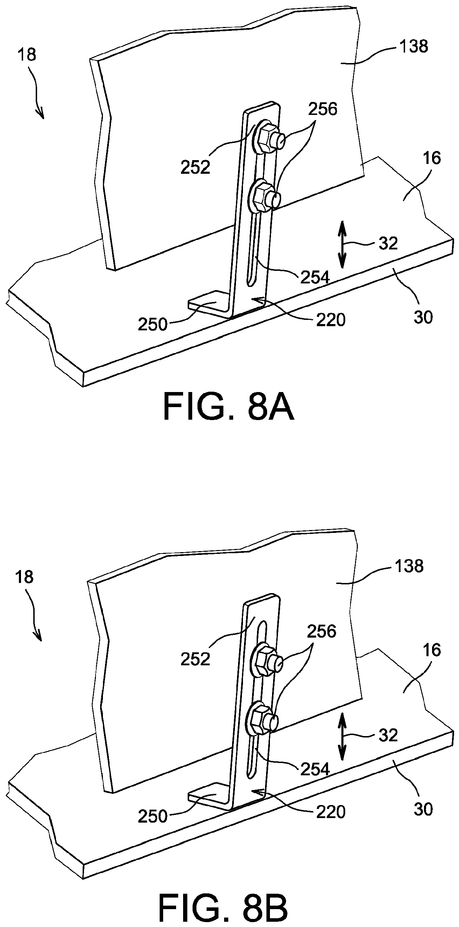

Pour sa fabrication schématisée en référence aux figures 8a et 8b, le miroir 16 est tout d'abord mis en forme sur un moule 30, puis solidarisé à ce dernier de façon temporaire, par exemple à l'aide d'un adhésif conventionnel. C'est le moule 30 qui applique donc provisoirement la forme définitive au miroir 16.

Ensuite, il est procédé au montage des pattes 220 sur les nervures 138. Comme évoqué ci-dessus, la figure 8a montre que chaque patte 220 présente une tête d'appui 250 destinée à être appliquée contre le miroir, ainsi qu'un corps vertical 252 portant cette tête.

Le corps est pourvu d'une rainure droite verticale 254 traversée par deux vis 256 appartenant à des boulons, ces vis étant logées dans des trous de passage (non représentés) des nervures 138.

Pour réaliser le montage, les vis 256 sont mises en place à travers les trous de passage et à travers les rainures 254, puis les écrous associés sont vissés aux extrémités de ces vis.

Après montage de toutes les pattes 220, celles-ci sont retenues par appui de la vis la plus haute contre l'extrémité haute de la rainure 254, comme montré sur la figure 8a. Les écrous peuvent être serrés de manière à appliquer une force de friction entre les pattes 252 et les nervures 138, sans pour autant interdire le déplacement relatif entre les deux selon la hauteur, nécessaire à la réussite de l'étape ultérieure qui va à présent être décrite.

Effectivement, il est ensuite opéré une étape de mise en position du miroir 16 par rapport à la structure arrière 18, par déplacement relatif entre l'ensemble constitué du moule 30 portant le miroir, et la structure 18. Concrètement, la structure de support est placée immobile dans un repère connu, dans lequel l'ensemble moule/miroir se déplace verticalement vers le haut en direction de cette structure, comme cela a été schématisé par la flèche 32 sur la figure 8b. A la fin de cette étape de mise en position du miroir 16, celui-ci se retrouve en regard et à distance de la structure 18, ces deux éléments adoptant alors leur position relative définitive.

L'une des particularités de ce troisième mode de réalisation préféré réside dans le fait qu'une étape d'ajustement des pattes 220 s'effectue au moins en partie automatiquement durant l'étape précédemment décrite de mise en position du miroir, représentée sur la figure 8b.

En effet, au cours du déplacement relatif entre le miroir 16 et la structure 18, la tête d'appui 250 des pattes 220 arrive en appui contre la surface interne du miroir, et la poursuite de ce déplacement conduit à un déplacement relatif des pattes 220 par rapport aux nervures 136, autorisé grâce au coulissement des vis 256 dans les rainures 254. Il est fait en sorte que le diamètre des vis soit sensiblement identique à la largeur de la rainure, de manière à imposer un seul degré de liberté à chaque patte 220, correspondant à celui du coulissement précité. La liaison mécanique réalisée constitue ainsi une glissière.

C'est donc l'appui contre le miroir et la poursuite du déplacement relatif entre ce dernier et la structure arrière qui conduisent au coulissement des pattes 220 relativement à cette structure arrière. Le caractère automatique du déplacement est naturellement avantageux en ce qu'il simplifie la mise en oeuvre du procédé.

Bien entendu, le coulissement n'est pas le même pour chaque patte 220. L'étendue du coulissement est fonction de l'éloignement entre le miroir et les arêtes des nervures 138 en regard de ce miroir. Ces nervures peuvent donc être réalisées avec des grandes tolérances, sans que cela ne soit préjudiciable au maintien en forme du miroir, puisque ce dernier est porté directement par la tête 250 des pattes 220, et non par les nervures 138.

Le coulissement précité peut être poursuivi après l'étape de mise en position du miroir, par exemple pour améliorer l'appui des têtes 250 contre le miroir, et/ou, le cas échéant, enlever la colle en surplus des pattes 220 qui ont été préalablement encollées. Cela peut s'effectuer manuellement, ou de manière automatisée.

Après cette démarche optionnelle, l'étape d'ajustement des pattes 220 est achevée, et ces dernières occupent alors leur position de solidarisation correspondant à leur position définitive par rapport au miroir et à la structure de support, ces pattes étant toujours maintenues par les boulons. Ensuite, ces pattes 220 sont collées sur le miroir. Dans le cas éventuel où elles ont été préalablement encollées avant leur assemblage sur nervures 138, il suffit alors d'observer un simple temps de séchage pour obtenir le durcissement de cette colle.

Du côté de la structure arrière 18, les boulons sont serrés de manière à interdire tout déplacement relatif entre les nervures 138 et les pattes 220. La solidarisation s'effectue donc ici par vissage. Ainsi, en cas de remplacement du miroir, il devient facile de réutiliser la structure 18 et ses pattes 220, par desserrage puis resserrage des boulons.

Bien entendu, diverses modifications peuvent être apportées par l'homme du métier à l'invention qui vient d'être décrite, uniquement à titre d'exemples non limitatifs.

## Revendications

1. Procédé de fabrication d'un réflecteur (6) convenant à concentrer le rayonnement solaire sur un capteur, le réflecteur (6) comprenant un miroir (16) supporté par une structure de support (18), ledit procédé comprenant une étape de mise en position du miroir par rapport à ladite structure de support par déplacement relatif d'un moule (30) supportant le miroir, par rapport à ladite structure de support,
**caractérisé en ce qu'**il comprend également une étape d'ajustement d'une pluralité d'éléments de jonction (120) entre le miroir et la structure de support, dans une position de solidarisation dans laquelle ils sont destinés à être collés au miroir et solidarisés à la structure de support, cette étape d'ajustement, réalisée durant ladite étape de mise en position du miroir et/ou après celle-ci, conduisant à un déplacement d'au moins certains des éléments de jonction relativement à ladite structure de support, et **en ce que** lesdits éléments de jonction sont des profilés (120) de section en forme globale de T dont la base de chacun d'eux est doublée de manière à laisser apparaître entre les deux bases (142a, 142b) un espace (144) pénétré par une partie de glissement (138a) de la structure de support (18), qui glisse dans cet espace (144) durant ladite étape de mise en position du miroir (16) .

2. Procédé de fabrication selon la revendication 1, dans lequel ladite étape d'ajustement, conduisant au déplacement d'au moins certains des éléments de jonction (120) relativement à ladite structure de support (18), s'effectue au moins partiellement automatiquement durant ladite étape de mise en position du miroir (16), après appui des éléments de jonction concernés contre ledit miroir.

3. Procédé de fabrication selon la revendication 1 ou revendication 2, dans lequel chaque profilé (120) est monté sur la structure de support (18) avant la mise en oeuvre de ladite étape de mise en position du miroir, par pincement de ladite partie de glissement (138a) de la structure de support correspondante (18), entre les deux bases du profilé (142a, 142b).

4. Procédé de fabrication selon l'une quelconque des revendications précédentes, dans lequel lesdits éléments de jonction (120) sont destinés à être solidarisés sur la structure de support (18) par collage et/ou vissage et/ou soudage et/ou rivetage.

5. Procédé de fabrication selon l'une quelconque des revendications précédentes, dans lequel lesdits éléments de jonction (120) sont destinés à être solidarisés par collage sur le miroir (16) et/ou sur la structure de support (18), lesdits éléments de jonction étant encollés avant la mise en oeuvre de l'étape d'ajustement.

6. Procédé de fabrication selon l'une quelconque des revendications précédentes, dans lequel ladit miroir (16) n'est pas plan, et dans lequel ledit miroir (16) est réalisé à base de verre.

7. Procédé de fabrication selon l'une quelconque des revendications précédentes, dans lequel leSdits éléments de jonction (20, 120, 220) sont métalliques, en céramique, ou en matériau polymère.

8. Champ (4) de réflecteur (6) chacun fabriqué selon un procédé défini dans l'une quelconque des revendications précédentes.

9. Champ de réflecteurs selon la revendication 8, **caractérisé en ce qu'**il est du type Fresnel, avec les réflecteurs (6) agencés côte à côte et chaque structure de support (18) montée pivotante sur un bâti (8).

10. Système (1) comprenant un capteur solaire (2) ainsi qu'un champ (4) de réflecteur (6) concentrant le rayonnement solaire sur le capteur, selon la revendication 8 ou la revendication 9.

## Patentansprüche

1. Verfahren zum Herstellen eines Reflektors (6), der dazu geeignet ist, die Sonneneinstrahlung auf einen Kollektor zu konzentrieren, wobei der Reflektor (6) einen Spiegel (16) enthält, der von einer Tragstruktur (18) getragen wird, wobei das Verfahren einen Schritt zum Positionieren des Spiegels bezüglich der Tragstruktur durch relatives Verlagern einer den Spiegel tragenden Form (30) bezüglich der Tragstruktur umfasst,
**dadurch gekennzeichnet, dass**
es auch einen Schritt des Anpassens einer Mehrzahl von Verbindungselementen (120) zwischen dem Spiegel und der Tragstruktur in einer Verbindungsposition umfasst, in welcher sie dazu bestimmt sind, mit dem Spiegel verklebt und fest mit der Tragstruktur verbunden zu werden, wobei dieser Anpassungsschritt, der während des Schritts der Positionierung des Spiegels und/oder danach erfolgt, zu einer Verlagerung von zumindest bestimmten der Verbindungselemente relativ zur Tragstruktur führt, und dass die Verbindungselemente im Querschnitt T-förmige Profile (120) sind, deren Basisteil jeweils so verdoppelt ist, dass zwischen den beiden Basisteilen (142a, 142b) ein Zwischenraum (144) auftritt, der von einem Gleitabschnitt (138a) der Tragstruktur (18) durchsetzt wird, der in diesem Zwischenraum (144) während des Schritts des Positionierens des Spiegels (16) gleitet.

2. Herstellungsverfahren nach Anspruch 1, wobei der Schritt des Anpassens, der zur Verlagerung von zumindest bestimmten der Verbindungselemente (120) relativ zur Tragstruktur (18) führt, während des Schritts des Positionierens des Spiegels (16) nach Abstützung der betreffenden Verbindungselemente an dem Spiegel zumindest teilweise automatisch erfolgt.

3. Herstellungsverfahren nach Anspruch 1 oder Anspruch 2, wobei jedes Profil (120) an der Tragstruktur (18) vor dem Durchführen des Schritts des Positionierens des Spiegels durch Einklemmen des Gleitteils (138a) der entsprechenden Tragstruktur (18) zwischen den beiden Basisteilen des Profils (142a, 142b) angebracht wird.

4. Herstellungsverfahren nach einem der vorangehenden Ansprüche, wobei die Verbindungselemente (120) dazu bestimmt sind, durch Verkleben und/oder Verschrauben und/oder Verschweißen und/oder Vernieten fest mit Tragstruktur (18) verbunden zu werden.

5. Herstellungsverfahren nach einem der vorangehenden Ansprüche, wobei die Verbindungselemente (120) dazu bestimmt sind, durch Verkleben mit dem Spiegel (16) und/oder mit der Tragstruktur (18) verbunden zu werden, wobei die Verbindungselemente vor dem Durchführen des Schritts des Anpassens beleimt werden.

6. Herstellungsverfahren nach einem der vorangehenden Ansprüche, wobei der Spiegel (16) nicht eben ist und wobei der Spiegel (16) auf Basis von Glas hergestellt ist.

7. Herstellungsverfahren nach einem der vorangehenden Ansprüche, wobei die Verbindungselemente (20, 120, 220) aus Metall, Keramik oder Polymermaterial bestehen.

8. Feld (4) von Reflektoren (6), die jeweils mit einem Verfahren nach einem der vorangehenden Ansprüche hergestellt sind.

9. Feld von Reflektoren nach Anspruch 8, **dadurch gekennzeichnet, dass** es vom Typ Fresnel ist mit Reflektoren (6), die nebeneinander angeordnet sind, und jede Tragstruktur (18) an einem Gestell (8) verschwenkbar gelagert ist.

10. System (1) mit einem Sonnenkollektor (2) sowie einem Feld (4) von Reflektoren (6) nach Anspruch 8 bzw. Anspruch 9 zum Konzentrieren der Sonneneinstrahlung auf den Kollektor.

## Claims

1. A method for manufacturing a reflector (6) suitable for concentrating the solar radiation onto a sensor, the reflector (6) comprising a mirror (16) supported by a support structure (18), said method comprising a step of positioning the mirror relative to said support structure through relative displacement of a mould (30) supporting the mirror, relative to said support structure,
**characterized in that** it also comprises a step of adjusting a plurality of junction elements (120) between the mirror and the support structure, in a securing position in which they are intended to be bonded to the mirror and secured to the support structure, this adjusting step, performed during said step of positioning the mirror and/or after the same, leading to a displacement of at least some of the junction elements relative to said support structure, and **in that** said junction elements are profiles (120) having a generally T-shaped cross-section the base of each of which is doubled so as to reveal between both bases (142a, 142b) a gap (144) penetrated by a sliding part (138a) of the support structure (18), which slides in this gap (144) during said step of positioning the mirror (16).

2. The manufacturing method according to claim 1, wherein said adjusting step, leading to the displacement of at least some of the junction elements (120) relative to said support structure (18), is at least partially automatically performed during said step of positioning the mirror (16), after the relevant junction elements are borne against said mirror.

3. The manufacturing method according to claim 1 or claim 2, wherein each profile (120) is mounted to the support structure (18) before implementing said step of positioning the mirror, by pinching said sliding part (138a) of the corresponding support structure (18), between both bases of the profile (142a, 142b).

4. The manufacturing method according to any of the previous claims, wherein said junction elements (120) are intended to be secured on the support structure (18) by bonding and/or screwing and/or welding and/or riveting.

5. The manufacturing method according to any of the previous claims, wherein said junction elements (120) are intended to be secured by bonding onto the mirror (16) and/or onto the support structure (18), said junction elements being glued before implementing the adjusting step.

6. The manufacturing method according to any of the previous claims, wherein said mirror (16) is not planar, and wherein said mirror (16) is made of glass.

7. The manufacturing method according to any of the previous claims, wherein said junction elements (20, 120, 220) are of metal, ceramics, or polymeric material.

8. A field (4) of a reflector (6), both being manufactured according to a method defined in any of the previous claims.

9. The field of reflectors according to claim 8, **characterized in that** it is of the Fresnel type, with the reflectors (6) being arranged side by side and each support structure (18) being pivotably mounted on a chassis (8).

10. A system (1) comprising a solar sensor (2) as well as a field (4) of a reflector (6) concentrating the solar radiation onto the sensor, according to claim 8 or claim 9.
